# EUROPÄISCHE PATENTSCHRIFT

(11) **EP 1 246 491 B1**
(45) Veröffentlichungstag und Bekanntmachung des Hinweises auf die Patenterteilung: **23.07.2003**
(21) Anmeldenummer: 01810327.5
(22) Anmeldetag: 30.03.2001
(51) Int. Cl.: H04Q 7/38

(54) **Verfahren zum Bestellen neuer Verträge für Mobilfunkgeräte**
Method for ordering new subscriptions for mobile radio devices
Procédé pour commander des abonnements pour des appareils radiotéléphoniques mobiles

(43) Veröffentlichungstag der Anmeldung: 02.10.2002
(73) Patentinhaber: Swisscom Mobile AG, 3050 Bern (CH)
(72) Erfinder: Groeneweg, Maarten, 3600 Thun (CH); Clément, Pascal, 3067 Boll (CH)
(74) Vertreter: BOVARD AG - Patentanwälte

(56) Entgegenhaltungen:
- EP-A- 0 986 275
- EP-A- 1 009 181
- WO-A-01/54427
- WO-A-97/28665
- WO-A-99/07173
- WO-A-99/29131

## Beschreibung

Die vorliegende Erfindung betrifft ein Verfahren zum Bestellen neuer Verträge für die Benutzung von Mobilfunkgeräten in einem Mobilfunknetz, wobei ein Benutzer eines Mobilfunkgerätes mindestens einen gültigen Vertrag mit einer entsprechenden Rufnummer im Mobilfunknetz besitzt. Insbesondere betrifft die Erfindung ein Verfahren zum Bestellen neuer Verträge für Mobilfunkgeräte, bei welchem mindestens teilweise zum Bestellen der Verträge die dazu notwendigen Angaben übers Internet gemacht werden.

In den letzten Jahren ist weltweit die Anzahl der Benutzer von Mobilfunknetzen fast exponentiell gestiegen und steigt immer noch. Ebenso hat sich die Anzahl der Anbieter von Mobilfunkdiensten vervielfacht, womit sich auch der Kampf um potentielle neue Benutzer bzw. um die bestehenden Benutzer verschärft hat. Beides führte zu einer immensen Anzahl Mutationen, Neueinrichtungen und Kündigungen pro Tag und Mobilfunkdienstanbieter. Um Missbrauch zu verhindern ist es heute immer noch üblich, dass das Bestellen neuer Verträge, Modifikationen bestehender Verträge und/oder Kündigung von Verträgen für die Benutzung von Mobilfunknetzen im Fachhandel oder in eigens dafür eingerichteten Mobil-Shops geschieht. Dies ist mit grossen Kosten und personellem Aufwand verbunden. Im Stand der Technik sind verschiedene Verfahren bekannt, um mittels eines Mobilfunkgerätes Waren oder Dienstleistungen über ein Mobilfunknetz bei einem Anbieter zu bestellen. Die europäische Patentveröffentlichung EP 0986275 A1 zeigt ein Beispiel eines solchen Verfahrens. Dabei werden die Bestellungsdaten über das Mobilfunknetz mit SMS- oder USSD- oder E-Mail-Kurzmeldungen an den Anbieter übertragen. Die Waren oder Dienstleistung werden nach erfolgter Bestellung auch der Rechnungsadresse verrechnet, welcher das Mobilfunkgerät zur Benutzung im Mobilfunknetz zugeordnet ist.

WO 01/54427 (DETEMOBIL DEUTSCHE TELEKOM MOBILNET GMBH), veröffentlicht am 26. Juli 2001, mit einer Priorität vom 20. Januar 2000 fällt unter Artikel 54 (3) EPÜ.

Die WO 01/54427 offenbart ein Verfahren zur teilnehmerinitiierten automatischen Subskribierung in zellularen Mobilfunknetzen.

Es ist eine Aufgabe dieser Erfindung, ein neues Verfahren zum Bestellen neuer Verträge für die Benutzung von Mobilfunkgeräten in einem Mobilfunknetz vorzuschlagen. Insbesondere soll das Bestellen, Modifizieren und/oder Kündigen von Verträgen ohne direkten aufwendigen Kundenkontakt möglich sein und die Möglichkeiten zu einem Missbrauch der Verträge soll minimiert werden.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zum Bestellen neuer Verträge für die Benutzung von Mobilfunkgeräten in einem Mobilfunknetz ein Benutzer eines Mobilfunkgerätes mindestens einen gültigen Vertrag mit einer entsprechenden Rufnummer im Mobilfunknetz besitzt, welche Rufnummer einem Identifikationsmodul des Mobilfunkgerätes eindeutig zugeordnet ist, wobei der Benutzer über das Mobilfunkgerät bei einer Zentraleinheit einen neuen, noch nicht bestehenden Vertrag bestellt und dabei die notwendigen Angaben zum Einrichten des Vertrages macht, wobei der Benutzer anhand der Rufnummer, die dem Identifikationsmodul des Mobilfunkgerätes zugeordnet ist, eindeutig identifiziert wird, wobei der neue Vertrag basierend auf einer neuen Rufnummer des Mobilfunknetzes von der Zentraleinheit erstellt und einem bei der Bestellung festgelegten Benutzer zugeordnet wird und wobei dem Benutzer des neuen Vertrages ein der neuen Rufnummer eindeutig zugeordnetes Identifikationsmodul zugänglich gemacht wird. Das Identifikationsmodul kann z.B. wie in den Vereinigten Staaten üblich, ein fester Bestandteil des Mobilfunkgerätes sein oder wie in Europa gebräuchlich, eine entfernbare Chipkarte wie z.B. eine SIM-Karte (Subscriber Identity Module), WIM-Karte (WAP Identity Module) oder eine UIM (UMTS Identity Module) sein. Ein Vorteil der Erfindung ist, dass die Bestellung, Modifikation und Kündigung auf eine vor Missbrauch sicheren und trotzdem für den Mobilfunkdienstanbieter effizienten Art erfolgt, d.h. effizient bezüglich Kosten und Mitarbeiteraufwand. Gleichzeitig ist dies auch für den Benutzer eine bequemere und zeitsparendere Art, welche ihm erlaubt, schnell und einfach auf geänderte Ansprüche seinerseits einzugehen.

In einer Ausführungsvariante wird zum Bestellen neuer Verträge für die Benutzung von Mobilfunkgeräten in einem Mobilfunknetz der neue Vertrag nicht als unabhängiger neuer Vertrag, sondern dem bestehenden Vertrag zugeordnet erstellt. Diese Ausführungsvariante hat u.a. den Vorteil, dass der Mobilfunkdienstanbieter eine zusätzliche Sicherheit erhält, da z.B. die Zahlungsmoral des Benutzers des unabhängigen Vertrages bekannt ist, und der administrative Aufwand durch die Sicherheiten über den bestehenden Vertrag vereinfacht werden kann. Gleichzeitig kann es für den Benutzer als Anreiz dienen, beim gleichen Dienstanbieter mehrere Verträge einzugehen, da er dabei z.B. die Vorteile einer Bestellung über das Mobilfunkgerät nutzen kann.

In einer weiteren Ausführungsvariante ist beim Bestellen neuer Verträge für die Benutzung von Mobilfunkgeräten in einem Mobilfunknetz die Anzahl der zugeordneten abhängigen Verträge pro unabhängigem Vertrag beschränkt. Es kann sich dabei auch um eine Beschränkung der Anzahl Bestellungen pro bestimmbarer Zeiteinheit handeln. Hier bestehen u.a. die Vorteile, dass der Anbieter von Mobilfunkdiensten die Möglichkeiten eines Missbrauchs von Seiten der Benutzer, z.B. indem andere Benutzer von den Vorteilen des Verfahrens profitieren, ohne dass sie zu einer definierten Zielgruppe gehören, reduzieren kann.

In einer weiteren Ausführungsvariante werden beim Bestellen neuer Verträge für die Benutzung von Mobilfunkgeräten in einem Mobilfunknetz nach einer der oben genannten Ausführungsvarianten die Grundgebühren für die dem unabhängigen Vertrag zugeordneten abhängigen Verträge insgesamt tiefer oder abgestuft tiefer erhoben. Dies hat den Vorteil, dass der Anbieter von Mobilfunkdiensten die Inanspruchnahme des Verfahrens gemäss der vorliegenden Erfindung gezielt fördern und für den Benutzer attraktiver machen kann.

In einer Ausführungsvariante wird zum Bestellen neuer Verträge für die Benutzung von Mobilfunkgeräten in einem Mobilfunknetz neben dem Benutzer des neuen Vertrages zusätzlich die Rechnungsadresse bei der Bestellung festgelegt. Dies hat u.a. den Vorteil, dass der administrative Aufwand weiter reduziert werden kann und die Sicherheit für den Anbieter der Mobilfunkdienste betreffend der Verrechnung der in Anspruch genommenen Leistungen erhöht werden kann.

In einer zusätzlichen Ausführungsvariante gilt beim Bestellen neuer Verträge für die Benutzung von Mobilfunkgeräten in einem Mobilfunknetz für den neuen Vertrag automatisch die gleiche Rechnungsadresse wie beim bestehenden unabhängigen Vertrag. Diese Ausführungsvariante hat u.a. die gleichen Vorteile wie die vorhergehende Ausführungsvariante.

In einer anderen Ausführungsvariante zum Bestellen neuer Verträge für die Benutzung von Mobilfunkgeräten in einem Mobilfunknetz legt der Benutzer bei der Bestellung des neuen Vertrages fest, in welcher Art er das der Rufnummer des neuen Vertrages zugeordnete Identifikationsmodul zugänglich gemacht haben möchte. Einer der Vorteile dieser Ausführungsvariante ist, dass der Benutzer seine persönlichen Bedürfnisse berücksichtigen kann. So ist es z.B. möglich, dass er das Identifikationsmodul per Post zugesandt haben möchte, falls er z.B. nicht in der Nähe von einer möglichen Bezugsstelle für Identifikationsmodule wohnt oder keine Zeit zum Abholen hat, während er, falls er den Mobilfunknetzzugang dringend braucht, einen teureren, dafür aber schnelleren Zustelldienst wählen kann oder das Identifikationsmodul bei einer Bezugsstelle direkt abholen kann.

In einer Ausführungsvariante zum Bestellen neuer Verträge für die Benutzung von Mobilfunkgeräten in einem Mobilfunknetz wird das der Rufnummer des neuen Vertrages zugeordnete Identifikationsmodul ihrem Benutzer mit der Post oder einem anderen Sendedienst zugestellt. Diese Ausführungsvariante hat den Vorteil, dass der Benutzer auf einfache Weise sein bestelltes Identifikationsmodul zugestellt erhält.

In einer Ausführungsvariante muss beim Bestellen neuer Verträge für die Benutzung von Mobilfunkgeräten in einem Mobilfunknetz der Benutzer des neuen Vertrages ein Familienmitglied des Benutzers des unabhängigen Vertrages oder ein Mitbewohner des gleichen Haushalts sein. Dies hat den Vorteil, dass der Mobilfunkdienstanbieter ein erhöhtes Mass an Sicherheit vor Missbrauch des Bestellwesens erhält.

In einer weiteren Ausführungsvariante zum Bestellen neuer Verträge für die Benutzung von Mobilfunkgeräten in einem Mobilfunknetz erfolgt die Bestellung über das Mobilfunkgerät mittels einer der Datenprotokolle SMS (Short Message Service), WAP (Wireless Application Protocol), HTTP (Hyper Text Transfer Protocol) oder USSD (Unstructured Supplementary Service Data). Einer der Vorteile dieser Ausführungsvariante ist, dass die Bestellung unter Benutzung gängiger Datenprotokolle erfolgt.

In einer Ausführungsvariante zum Bestellen neuer Verträge für die Benutzung von Mobilfunkgeräten in einem Mobilfunknetz ist das Identifikationsmodul eine Chipkarte im Kreditkarten-Format ISO 7816 oder im Plug-In-Format.

In einer Ausführungsvariante zum Bestellen neuer Verträge für die Benutzung von Mobilfunkgeräten in einem Mobilfunknetz erfolgt die Eingabe der Bestellung über das Mobilfunkgerät mittels Spracherkennung (Voice Recognition) eines Spracherkennungsmoduls. Das Spracherkennungsmodul kann z.B. softwaremässig, beispielsweise serverseitig oder als lokale Applikation im Mobilfunkgerät realisiert sein. Die Spracherkennungsmodule können im Fall der lokalen Applikation vorzugsweise Applets sein, welche in einer portablen Programmiersprache ausgeführt sind, beispielsweise in Java der Firma Sun Microsystems oder einer ähnlichen Programmiersprache, die es ermöglicht, Spracherkennungs-Applets hardwareunabhängig, beispielsweise auf einer virtuellen Plattform des Mobilfunkgerätes, auszuführen. Ein Vorteil dieser Ausführungsvariante ist u.a., dass sich die für den Benutzer zum Teil aufwendige und zeitraubende Eingabe der notwendigen Angaben zur Bestellung über die Eingabeelemente des Mobilfunkgerätes stark vereinfacht. Gerade bei umfangreicheren Angaben kann ein Spracherkennungsmodul grosse Vorteile bieten.

In einer Ausführungsvariante zum Bestellen neuer Verträge für die Benutzung von Mobilfunkgeräten in einem Mobilfunknetz ist der neue Vertrag ein Vertrag mit Prepaid- oder Postpaid-Verfahren, wobei dem Benutzer des unabhängigen Vertrages monatlich ein bestimmter Betrag für den neuen Vertrag belastet wird. In dieser Ausführungsvariante kann ein Benutzer des neuen Vertrages z.B. auch den vom Benutzer des unabhängigen Vertrages bezahlten festen monatlichen Prepaid-Betrag durch eigene Zahlen erhöhen. Diese Ausführungsvariante hat u.a. den Vorteil, dass er sich besonders für Familien mit z.B. Kindern eignet, bei welchen die Eltern den Kindern einen fixen Prepaid-Betrag monatlich bezahlen und die Kinder, falls notwendig weitere Gebühren, welche diesen fixen Betrag übersteigen, selber bezahlen müssen.

In einer Ausführungsvariante zum Bestellen neuer Verträge für die Benutzung von Mobilfunkgeräten in einem Mobilfunknetz vervollständigt und/oder erweitert und/oder modifiziert der Benutzer nach getätigter Bestellung des Vertrages die Angaben zum Vertrag über Internetzugriff bei der Zentraleinheit, wobei die Identifizierung des Benutzers bei der Bestellung des Vertrages mittels des Identifikationsmoduls des Mobilfunkgerätes erfolgte. Diese Ausführungsvariante hat ähnliche Vorteile wie die vorhergehende Ausführungsvariante, da Internetterminals wie PCs (Personal Computers) meist über viel effizientere Eingabeelemente (z.B. die für PCs üblichen Schreibtastaturen) als Mobilfunkgeräte verfügen und deshalb besonders die Eingabe umfangreicherer Angaben stark vereinfachen.

In einer anderen Ausführungsvariante zum Bestellen neuer Verträge für die Benutzung von Mobilfunkgeräten in einem Mobilfunknetz besitzt ein Benutzer eines Mobilfunkgerätes mindestens einen gültigen Vertrag mit einer entsprechenden Rufnummer im Mobilfunknetz, welche Rufnummer einem Identifikationsmodul des Mobilfunkgerätes eindeutig zugeordnet ist, wobei der Benutzer via Internet bei einer Zentraleinheit einen neuen, noch nicht bestehenden Vertrag bestellt und die notwendigen Angaben zum Einrichten des Vertrages macht, wobei der neue Vertrag basierend auf einer neuen Rufnummer des Mobilfunknetzes von der Zentraleinheit erstellt und einem bei der Bestellung festgelegten Benutzer zugeordnet wird, wobei der Benutzer die Bestellung des neuen Vertrages durch einen Anruf bei der Zentraleinheit mit seinem Mobiltelefon übers Mobilfunknetz bestätigt, bei welchem Anruf der Benutzer anhand der Rufnummer, die dem Identifikationsmodul des Mobilfunkgerätes zugeordnet ist, eindeutig identifiziert wird und wobei dem Benutzer des neuen Vertrages ein der neuen Rufnummer eindeutig zugeordnetes Identifikationsmodul zugänglich gemacht wird. Diese Ausführungsvariante hat u.a. die gleichen Vorteile wie die vorhergehende Ausführungsvariante.

In einer wieder anderen Ausführungsvariante zum Kündigen oder Modifizieren von Verträgen für die Benutzung von Mobilfunkgeräten in einem Mobilfunknetz besitzt ein Benutzer eines Mobilfunkgerätes mindestens einen gültigen Vertrag mit einer entsprechenden Rufnummer im Mobilfunknetz, welche Rufnummer einem Identifikationsmodul des Mobilfunkgerätes eindeutig zugeordnet ist, wobei der Benutzer über das Mobilfunkgerät bei einer Zentraleinheit einen Antrag zur Kündigung oder Modifizierung eines bestehenden Vertrages stellt, wobei der Benutzer anhand der Rufnummer, die dem Identifikationsmodul des Mobilfunkgerätes zugeordnet ist, eindeutig identifiziert wird und wobei der Vertrag basierend auf dem Antrag gekündigt oder entsprechend modifiziert wird. Diese Ausführungsvariante hat u.a. den Vorteil, dass der Benutzer das gleiche einfache Verfahren zum Kündigen oder Modifizieren von Verträgen wie zum Bestellen neuer Verträge benutzen kann.

Nachfolgend werden Ausführungsvarianten der vorliegenden Erfindung anhand von Beispielen beschrieben. Die Beispiele der Ausführungen werden durch folgende beigelegte Figuren illustriert:
Figur 1 zeigt ein Blockdiagramm, welches schematisch ein Verfahren für ein Ausführungsbeispiel zum Bestellen neuer Verträge für die Benutzung von Mobilfunkgeräten in einem Mobilfunknetz illustriert.
Figur 2 zeigt ein Blockdiagramm, welches schematisch die Zuordnung von abhängigen Verträgen an einen unabhängigen bestehenden Vertrag gemäss einer der obigen Ausführungsvarianten illustriert.

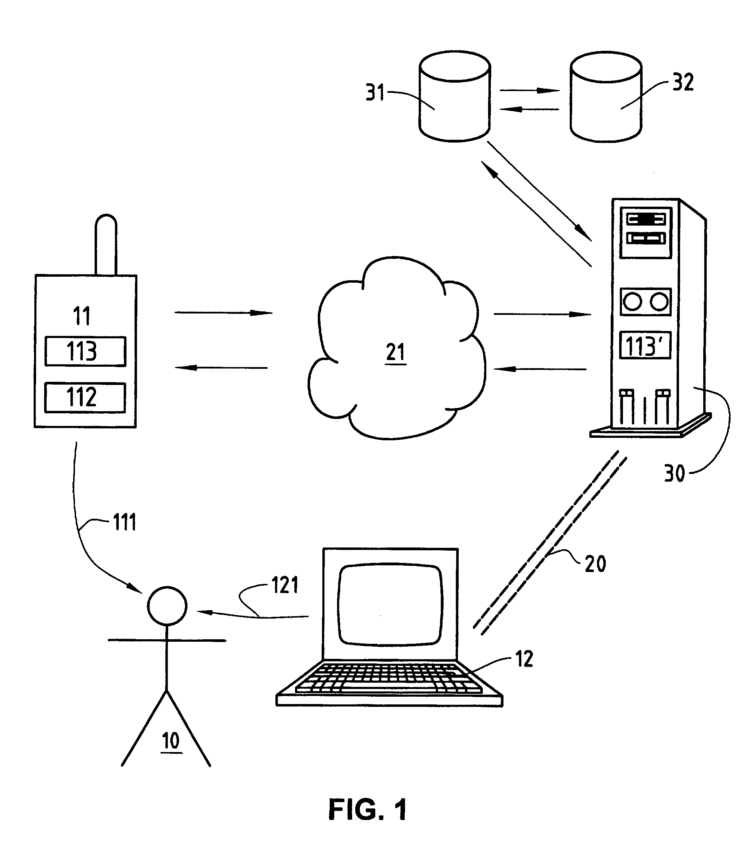

Figur 1 illustriert eine Architektur, die zur Realisierung der Erfindung verwendet werden kann. In der Figur 1 beziehen sich die Bezugszeichen 11 und 30 auf ein Mobilfunkgerät und eine Zentraleinheit, welche über die notwendige Infrastruktur, einschliesslich Hardware- und Softwarekomponenten sowie gegebenenfalls personelle Ressourcen, verfügen, um ein beschriebenes erfindungsgemässes Verfahren zu realisieren. In diesem Ausführungsbeispiel besitzt ein Benutzer 10 eines Mobilfunkgerätes 11 zum Bestellen neuer Verträge für die Benutzung von Mobilfunkgeräten in einem Mobilfunknetz 21 mindestens einen gültigen Vertrag mit einer entsprechenden Rufnummer im Mobilfunknetz 21, welche Rufnummer einem Identifikationsmodul 112 des Mobilfunkgerätes 11 eindeutig zugeordnet ist. Das Mobilfunknetz 21 kann z.B. ein GSM- (Global System for Mobile communication), ein UMTS- (Universal Mobile Telecommunications System) oder ein anderes Mobilfunknetz 21 sein. Die Kommunikation über das Mobilfunknetz 21 erfolgt beispielsweise mittels speziellen Kurzmeldungen, z.B. SMS (Short Message Services), über einen Signalisierungskanal wie z.B. USSD (Unstructured Supplementary Services Data) oder andere Techniken wie MExE (Mobile Execution Environment), GPRS (Generalized Packet Radio Service), WAP (Wireless Application Protocol) oder UMTS (Universal Mobile Telecommunications System) oder über einen Nutzkanal. Das Identifikationsmodul 112 kann z.B. wie in den Vereinigten Staaten üblich, ein fester Bestandteil des Mobilfunkgerätes 11 sein oder wie in Europa gebräuchlicher, eine entfernbare Chipkarte wie z.B. eine SIM-Karte (Subscriber Identity Module) oder Smart-Card. Die Zuordnung der Rufnummer zum Identifikationsmodul 112 kann z.B. über ein HLR (Home Location Register) erfolgen, indem im HRL die IMSI (International Mobile Subscriber Identity) einer Rufnummer z.B. einer MSISDN (Mobile Subscriber ISDN) zugeordnet abgespeichert ist. Der Benutzer 10 des bereits bestehenden Vertrages bestellt über das Mobilfunkgerät 11 bei einer Zentraleinheit 30 einen neuen, noch nicht bestehenden Vertrag und macht dabei die notwendigen Angaben zum Einrichten des Vertrages. Die Angaben erfolgen über Eingabeelemente des Mobilfunkgerätes 11 wie z.B. die herkömmlichen Eingabetasten, Touchscreen etc. oder z.B. ein Spracherkennungsmodul 113. Das Spracherkennungsmodul kann z.B. softwaremässig beispielsweise serverseitig 113' oder als lokale Applikation 113 im Mobilfunkgerät realisiert sein. Die Spracherkennungsmodule 113/113' können im Fall der lokalen Applikation vorzugsweise Applets sein, welche in einer portablen Programmiersprache ausgeführt sind, beispielsweise in Java der Firma Sun Microsystems oder einer ähnlichen Programmiersprache, die es ermöglicht, Spracherkennung-Applets hardwareunabhängig, beispielsweise auf einer virtuellen Plattform des Mobilfunkgerätes 11, auszuführen. Gerade bei aufwendigeren Eingaben kann die Eingabe mittels Spracherkennung grosse Vorteile bezüglich Benutzerfreundlichkeit gegenüber den meist miniaturisierten Eingabeelementen von Mobilfunkgeräten 11 aufweisen. Der Benutzer 10 wird beim Bestellen anhand der Rufnummer, die dem Identifikationsmodul 112 des Mobilfunkgerätes 11 zugeordnet ist, eindeutig identifiziert. Dies kann dadurch geschehen, dass Bestellinformationen zum Bestellen des neuen Vertrages vom Mobilfunkgerät 11 an die Zentraleinheit 30 übermittelt werden, welche Bestellinformationen mindestens die Angaben zum Erstellen des neuen Vertrages und einen Identifikationscode des Identifikationsmoduls 112 umfassen. Der Identifikationscode des Benutzers kann beispielsweise eine MSISDN (Mobile Subscriber ISDN), IMSI (International Mobile Subscriber Identity) oder andere IDs (Identification Number) sein. Falls die dem Identifikationsmodul 112 zugeordnete Rufnummer nicht gleichzeitig als Identifikationscode verwendet wird, so existiert mindestens eine eindeutige Verknüpfung der Rufnummer mit dem Identifikationscode in der Zentraleinheit 30. Die Angaben zum Bestellen eines neuen Vertrages können z.B. Name und/oder Adresse des Benutzers des neuen Vertrages und des entsprechenden Identifikationsmoduls, die Rechnungsadresse für die mit diesem neuen Vertrag in Anspruch genommenen Leistungen, Kündigungsklauseln, auf welche Art der Benutzer das bestellte Identifikationsmodul zugänglich gemacht haben will, etc. umfassen. Der neue Vertrag, basierend auf einer neuen Rufnummer des Mobilfunknetzes 21 und den durch den Benutzer 10 gemachten Angaben, wird von der Zentraleinheit 30 erstellt und dem bei der Bestellung festgelegten Benutzer zugeordnet. Schliesslich wird dem Benutzer des neuen Vertrages ein der neuen Rufnummer eindeutig zugeordnetes Identifikationsmodul zugänglich gemacht. Wie erwähnt kann es dem Benutzer überlassen sein, dass er bei der Bestellung festlegt, auf welche Art er das Identifikationsmodul zugänglich gemacht haben will, oder es ist als Bestellbedingung automatisch fixiert, z.B. dass das Identifikationsmodul per Post oder einem anderen Zustelldienst zugeschickt wird. Eine Möglichkeit ist ebenfalls, dass der Benutzer das Identifikationsmodul an vordefinierten Abgabestellen abholt.

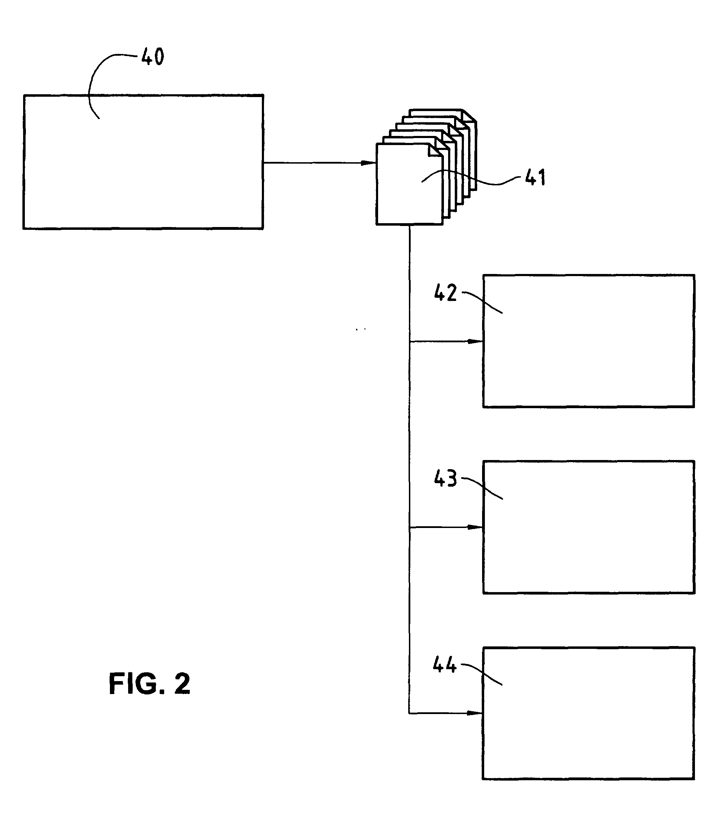

Wie Figur 2 illustriert kann es sinnvoll sein, den neuen Vertrag nicht als unabhängigen neuen Vertrag, sondern einem bestehenden Vertrag des Benutzers 10 des Mobilfunkgerätes 11 zugeordnet zu erstellen. Dabei kann es ebenfalls sinnvoll sein, dass die Anzahl der zugeordneten, abhängigen Verträge pro unabhängigem Vertrag beschränkt ist, z.B. um Missbrauch von Seiten der Benutzer zu verhindern. Es kann sich dabei auch um eine Beschränkung der Anzahl Bestellungen pro bestimmbare Zeiteinheit handeln, z.B. pro Halbjahr etc. Der unabhängige Vertrag 40 umfasst z.B. eine Rechnungsadresse (welche beispielsweise durch eine Solvenzprüfung des Kunden durch den Anbieter der Mobilfunkdienste verifiziert worden ist), eine Korrespondenzadresse und/oder Wohnadresse und/oder andere Angaben zum Inhaber des Vertrages. Beim Erstellen neuer abhängiger Verträge 41 werden diese mit dem unabhängigen Vertrag 40 verknüpft (z.B. in einer der Datenbank 31 der unabhängigen Verträgen zugeordneten Datenbank 32 (Figur 1)) abgespeichert. Die Referenznummern 42, 43 und 44 stellen Beispiele solcher abhängiger Verträge dar. Grundgebühren für die dem unabhängigen Vertrag 40 zugeordneten abhängigen Verträge 41 können insgesamt tiefer oder abgestuft tiefer erhoben werden. Dies kann als Anreiz für Benutzer dienen, dass sie zu ihren unabhängigen Verträgen weitere abhängige Verträge mit ihrem Anbieter eingehen. Für die abhängigen Verträge kann verlangt werden, dass der Benutzer des neuen Vertrages ein Familienmitglied des Benutzers des unabhängigen Vertrages oder ein Mitbewohner des gleichen Haushalts sein muss. Dies kann z.B. kontrolliert werden, indem von den abhängigen Verträgen verlangt wird, dass für alle zugeordneten abhängigen Verträge die Rechnungsadresse, d.h. die Adresse, an welche die Rechnungen für die vom Benutzer bezogenen Mobilfunkleistungen geschickt werden, die gleiche sein muss (oder automatisch vorgegeben wird), wie sie für den unabhängigen Vertrag gilt. In Verfahren, wo diese Sicherheitsvorkehrung nicht sinnvoll ist, ist es aber auch möglich, dass die Rechnungsadresse für jeden möglichen Vertrag frei gewählt werden kann. Im Beispiel von Figur 2 stellt z.B. 40 den Vertrag des Vaters für die Nutzung eines Mobilfunkgerätes in einem Mobilfunknetz mit einer Grundgebühr von beispielsweise CHF 25 dar, 42 einen ersten abhängigen Vertrag von der Mutter mit einer reduzierten monatlichen Gebühr von CHF 18 und 43 resp. 44 abhängige Verträge zweier im gleichen Haushalt wohnenden Kinder dieser Eltern mit einer ebenfalls reduzierten Grundgebühr von z.B. CHF 11.

Es ist darauf hinzuweisen, dass sich das Verfahren so z.B. zum Abschliessen von Verträgen mit beispielsweise gemischten Zahlungsoptionen eignet. So kann der neue Vertrag 41 ein Vertrag 41 mit Prepaid- oder Postpaid-Verfahren sein, wobei dem Benutzer 10 des unabhängigen Vertrages 40 monatlich ein bestimmter Betrag für den neuen Vertrag 41 belastet wird. In dieser Ausführungsvariante kann ein Benutzer des neuen Vertrages 41 z.B. auch den vom Benutzer 10 des unabhängigen Vertrages bezahlten festen monatlichen Prepaid-Betrag durch eigene Zahlen erhöhen. Damit eignet sich diese Variante besonders z.B. für Familien mit Kindern, bei welchen die Eltern den Kindern einen fixen Prepaid-Betrag monatlich bezahlen wollen und die Kinder, falls notwendig, weitere Gebühren, welche diesen fixen Betrag übersteigen, selber bezahlen müssen. Damit haben die Eltern eine einfache Möglichkeit, die ihnen mit den zusätzlichen Verträgen anfallenden Kosten stets kontrollierbar zu halten.

Figur 1 zeigt zusätzlich zum beschriebenen Ausführungsbeispiel eine Erweiterung übers Internet oder einen ähnlichen Kommunikationskanal 20 zwischen einem Terminal 12 und der Zentraleinheit 30, die für viele Situationen sinnvoll sein kann. Der Kommunikationskanal 20 zwischen der Zentraleinheit 30 und dem Terminal 12 kann z.B. ein Telekommunikationsnetz, beispielsweise ein Festnetz, wie ein LAN (Local Area Network) oder WAN (Wide Area Network), das öffentliche geschaltete Telefonnetz (PSTN, Public Switched Telephone Network und/oder ISDN, Integrated Services Digital Network), das Internet oder ein anderes Kommunikationsnetz, insbesondere ein Mobilfunknetz umfassen. Der Benutzer hat darin die Möglichkeit, die Bestellung, Modifikation oder Löschung von Verträgen unter Einbezug z.B. des Internets vorzunehmen. So kann er die zur Bestellung notwendigen Angaben bequem an einem Terminal 12, wie einem Internetterminal, z.B. einem PC (Personal Computer), mit komfortableren Eingabemöglichkeiten als die des Mobilfunkgerätes 11 erledigen, ohne die Einschränkung der Eingabeelemente des Mobilfunkgerätes 11 zu haben. Die eindeutige Identifikation des Benutzers 10 wird dabei aber wie illustriert, mittels Identifikationsmodul 112 des Mobilfunkgerätes 11 entweder vor oder nach Eingabe der Angaben gemacht. Bei diesem zusätzlichen Verfahrensschritt über das Terminal 12 kann z.B., falls die Identifikation mit dem Mobilfunkgerät 11 vor der Eingabe der Angaben erfolgt, ein URL (Uniform Resource Locator) z.B. mit einem Passwort via SMS oder einem anderen erwähnten Datenprotokoll, dem Benutzer auf sein Mobilfunkgerät übermittelt werden 111, mittels welchem URL und Passwort der Benutzer übers Internet dann die vollständigen Angaben zur Bestellung, Modifikation oder Löschung der Verträge machen kann. Macht hingegen der Benutzer erst die notwendigen Angaben für die Bestellung, Modifikation oder Löschung der Verträge übers Internet und folgt die Identifikation erst danach übers Mobilfunkgerät 11, so kann dem Benutzer 10 am Ende seiner Angaben eine Mitteilung von der Zentraleinheit 30 auf sein Terminal 12 übermittelt werden, welche ihm eine bestimmte Rufnummer oder Datendienstnummer angibt, über welche er die Bestellung mittels Mobilfunkgerät bestätigen kann.

## Patentansprüche

1. Computergestütztes Verfahren zur automatisierten Bestellung neuer Verträge für die Benutzung von Mobilfunkgeräten in einem Mobilfunknetz, wobei einem Benutzer (10) eines Mobilfunkgerätes (11) mindestens ein gültiger Vertrag (40) mit einer entsprechenden Rufnummer im Mobilfunknetz (21) in einer Datenbank einer Zentraleinheit (30) zugeordnet abgespeichert ist, welche Rufnummer einem Identifikationsmodul (112) des Mobilfunkgerätes (11) eindeutig zugeordnet ist, **dadurch gekennzeichnet,**
**dass** der Benutzer (10) über das Mobilfunkgerät (11) bei der Zentraleinheit (30) einen neuen, noch nicht bestehenden Vertrag (41) bestellt, wobei er notwendige Angaben zum Einrichten des Vertrages mittels Eingabeelemente des Mobilfünkgerätes (11) macht und wobei die gemachten Angaben über das Mobilfunknetz (21) an die Zentraleinheit (30) übertragen werden,
**dass** der Benutzer (10) anhand der Rufnummer, die dem Identifikationsmodul (112) des Mobilfunkgerätes (11) zugeordnet ist, mittels einer Identifizierungseinheit im Mobilfunknetz (21) eindeutig identifiziert wird und eine Identifikation des Benutzers (10) an die Zentraleinheit (30) übertragen wird,
**dass** der neue Vertrag (41), basierend auf einer neuen Rufnummer des Mobilfunknetzes (21), von der Zentraleinheit (30) erstellt und mit entsprechender Rechnungsadresse einem bei der Bestellung festgelegten Benutzer in der Datenbank abgespeichert zugeordnet wird, wobei der neue Vertrag (41) mit dem Vertrag (40) des identifizierten Benutzers (10) verknüpft ist,
und **dass** die neue Rufnummer von der Zentraleinheit (30) zur Benutzung des Mobilfunknetzes (21) freigeschaltet wird und ein der neuen Rufnummer eindeutig zugeordnetes Identifikationsmodul dem Benutzer des neuen Vertrages (41) zugänglich gemacht wird.

2. Verfahren zum Bestellen neuer Verträge für die Benutzung von Mobilfunkgeräten in einem Mobilfunknetz nach Anspruch 1, **dadurch gekennzeichnet, dass** die Anzahl der zugeordneten abhängigen Verträge (41) pro unabhängigen Vertrag beschränkt ist.

3. Verfahren zum Bestellen neuer Verträge für die Benutzung von Mobilfunkgeräten in einem Mobilfunknetz nach einem der Ansprüche 1 oder 2, **dadurch gekennzeichnet, dass** die Grundgebühren für die dem unabhängigen Vertrag (40) zugeordneten abhängigen Verträge (41) insgesamt tiefer oder abgestuft tiefer erhoben werden.

4. Verfahren zum Bestellen neuer Verträge für die Benutzung von Mobilfunkgeräten in einem Mobilfunknetz nach einem der Ansprüche 1 bis 3, **dadurch gekennzeichnet, dass** bei der Bestellung des neuen Vertrages der Benutzer (10) mittels Mobilfunkgerät (11) dazu aufgefordert wird, die Art festzulegen, mit welcher der Benutzer das der Rufnummer des neuen Vertrages zugeordnete Identifikationsmodul zugänglich gemacht haben möchte.

5. Verfahren zum Bestellen neuer Verträge für die Benutzung von Mobilfunkgeräten in einem Mobilfunknetz nach einem der Ansprüche 1 bis 4, **dadurch gekennzeichnet, dass** die Bestellung über das Mobilfunkgerät mittels einer der Datenprotokolle SMS (Short Message Service), WAP (Wireless Application Protocol), HTTP (Hyper Text Transfer Protocol) oder USSD (Unstructured Supplementary Service Data) erfolgt.

6. Verfahren zum Bestellen neuer Verträge für die Benutzung von Mobilfunkgeräten in einem Mobilfunknetz nach einem der Ansprüche 1 bis 5, **dadurch gekennzeichnet, dass** das Identifikationsmodul (112) eine Chipkarte ist.

7. Verfahren zum Bestellen neuer Verträge für die Benutzung von Mobilfunkgeräten in einem Mobilfunknetz nach einem der Ansprüche 1 bis 6, **dadurch gekennzeichnet, dass** die Eingabe der Bestellung über das Mobilfunkgerät (11) mittels eines Spracherkennungsmodul erfolgt.

8. Verfahren zum Bestellen neuer Verträge für die Benutzung von Mobilfunkgeräten in einem Mobilfunknetz nach einem der Ansprüche 1 bis 7, **dadurch gekennzeichnet, dass** nach getätigter Bestellung des Vertrages, die Angaben zum Vertrag für den Benutzer (10) mittels Internetzugriff bei der Zentraleinheit (30) vervollständigbar und/oder erweiterbar und/oder modifizierbar sind, wobei die Identifikation des Benutzers (10) bei der Bestellung des neuen Vertrages (41) mittels des Identifikationsmoduls (112) des Mobilfunkgerätes (11) erfolgte.

9. Verfahren zum Bestellen neuer Verträge für die Benutzung von Mobilfunkgeräten in einem Mobilfunknetz nach einem der Ansprüche 1 bis 8, **dadurch gekennzeichnet, dass** der neue Vertrag (41), ein Vertrag (41) mit Prepaid- oder Postpaid-Verfahren ist, wobei dem Benutzer (10) des unabhängigen Vertrages (40) monatlich ein bestimmter Prepaid- oder Postpaidbetrag für den neuen Vertrag (41) belastet wird.

10. Computergestütztes Verfahren zur automatisierten Bestellung neuer Verträge für die Benutzung von Mobilfunkgeräten in einem Mobilfunknetz, wobei einem Benutzer (10) eines Mobilfunkgerätes (11) mindestens ein gültiger Vertrag (40) mit einer entsprechenden Rufnummer im Mobilfunknetz (21) in einer Datenbank einer Zentraleinheit (30) zugeordnet abgespeichert ist, welche Rufnummer einem Identifikationsmodul (112) des Mobilfunkgerätes (11) eindeutig zugeordnet ist, **dadurch gekennzeichnet,**
**dass** der Benutzer (10) via Internet (20) bei der Zentraleinheit (30) einen neuen, noch nicht bestehenden Vertrag bestellt, wobei er die notwendigen Angaben zum Einrichten des Vertrages mittels Eingabeelemente des Mobilfunkgerätes (11) macht, und wobei die gemachten Angaben über das Mobilfunknetz (21) an die Zentraleinheit (30) übertragen werden,
**dass** der Benutzer (10) des bestehenden Vertrages, die Bestellung des neuen Vertrages durch einen Anruf bei der Zentraleinheit (30) mit seinem Mobilfunkgerät (11) übers Mobilfunknetz (21) bestätigt, wobei der Benutzer mittels einer Identifizierungseinheit im Mobilfunknetz (21) eindeutig identifiziert wird und eine Identifikation des Benutzers (10) an die Zentraleinheit (30) übertragen wird,
**dass** der neue Vertrag (41), basierend auf einer neuen Rufnummer des Mobilfunknetzes (21), von der Zentraleinheit (30) erstellt und mit entsprechender Rechnungsadresse einem bei der Bestellung festgelegten Benutzer in der Datenbank abgespeichert zugeordnet wird, wobei der neue Vertrag (41) mit dem Vertrag (40) des identifizierten Benutzers (10) verknüpft ist,
und **dass** die neue Rufnummer von der Zentraleinheit (30) zur Benutzung des Mobilfunknetzes (21) freigeschaltet wird und ein der neuen Rufnummer eindeutig zugeordnetes Identifikationsmodul dem Benutzer des neuen Vertrages (41) zugänglich gemacht wird.

## Claims

1. Computer-aided method for automatic ordering of new subscriptions for the use of mobile radio devices in a mobile radio network, at least one valid subscription (40) with a corresponding call number in the mobile radio network (21) being stored, assigned to a user (10) of a mobile radio device (11), in a database of a central unit (30), which call number is unambiguously assigned to an identification module (112) of the mobile radio device (11), **characterised**
**in that** the user (10) orders at the central unit (30), via the mobile radio device (11), a new, not yet existing subscription (41), whereby he gives necessary data for setting up the subscription by means of input elements of the mobile radio device (11) and whereby the given data are transmitted to the central unit (30) via the mobile radio network (21),
**in that** the user (10) is unambiguously identified by means of an identification unit in the mobile radio network (21) on the basis of the call number which is assigned to the identification module (112) of the mobile radio device (11), and an identification of the user (10) is transmitted to the central unit (30),
**in that** the new subscription (41), based on a new call number of the mobile radio network (21), is created by the central unit (30) and is stored, assigned to a user stipulated during the ordering, with the corresponding billing address, in the database, the new subscription (41) being linked to the subscription (40) of the identified user (10),
and **in that** the new call number is cleared by the central unit (30) for use of the mobile radio network (21), and an identification module unambiguously assigned to the new call number is made accessible to the user of the new subscription (41).

2. Method for ordering of new subscriptions for the use of mobile radio devices in a mobile radio network according to claim 1, **characterised in that** the number of assigned dependent subscriptions (41) per independent subscription is limited.

3. Method for ordering of new subscriptions for the use of mobile radio devices in a mobile radio network according to one of the claims 1 or 2, **characterised in that** the base fees for the dependent subscriptions (41) assigned to the independent subscription (40) are imposed in a way lower overall or lower in a graded way.

4. Method for ordering of new subscriptions for the use of mobile radio devices in a mobile radio network according to one of the claims 1 to 3, **characterised in that** during the ordering of the new subscription the user (10) is asked by means of the mobile radio device (11) to stipulate the way in which the user would like to have the identification module, assigned to the call number of the new subscription, made accessible.

5. Method for ordering of new subscriptions for the use of mobile radio devices in a mobile radio network according to one of the claims 1 to 4, **characterised in that** the ordering via the mobile radio device takes place by means of one of the data protocols SMS (Short Message Service), WAP (Wireless Application Protocol), HTTP (Hyper Text Transfer Protocol) or USSD (Unstructured Supplementary Service Data).

6. Method for ordering of new subscriptions for the use of mobile radio devices in a mobile radio network according to one of the claims 1 to 5, **characterised in that** the identification module (112) is a chipcard.

7. Method for ordering of new subscriptions for the use of mobile radio devices in a mobile radio network according to one of the claims 1 to 6, **characterised in that** the placing of the order via the mobile radio device (11) is carried out by means of a speech recognition module.

8. Method for ordering of new subscriptions for the use of mobile radio devices in a mobile radio network according to one of the claims 1 to 7, **characterised in that** after the order for the subscription has been placed, the data for the subscription for the user (10) are able to be completed and/or supplemented and/or changed at the central unit (30) by means of Internet access, the identification of the user (10) during the ordering of the new subscription (41) having taken place by means of the identification module (112) of the mobile radio device (11).

9. Method for ordering of new subscriptions for the use of mobile radio devices in a mobile radio network according to one of the claims 1 to 8, **characterised in that** the new subscription (41) is a subscription (41) with prepaid or postpaid method, a particular prepaid or postpaid amount for the new subscription (41) being debited monthly to the user (10) of the independent subscription (40).

10. Computer-aided method for automatic ordering of new subscriptions for the use of mobile radio devices in a mobile radio network, at least one valid subscription (40) with a corresponding call number in the mobile radio network (21) being stored, assigned to a user (10) of a mobile radio device (11), in a database of a central unit (30), which call number is unambiguously assigned to an identification module (112) of the mobile radio device (11), **characterised**
**in that** the user (10) orders via Internet a new, not yet existing subscription (41), whereby he gives the necessary data for setting up the subscription by means of input elements of the mobile radio device (11) and whereby the given data are transmitted to the central unit (30) via the mobile radio network (21),
**in that** the user (10) of the existing subscription confirms via mobile radio network (21) the order for a new subscription through a call with the central unit (30) using his mobile radio device (11), the user being unambiguously identified by means of an identification unit in the mobile radio network (21), and an identification of the user (10) is transmitted to the central unit (30),
**in that** the new subscription (41), based on a new call number of the mobile radio network (21), is created by the central unit (30) and is stored, assigned to a user stipulated during the ordering, with the corresponding billing address, in the database, the new subscription (41) being linked to the subscription (40) of the identified user (10),
and **in that** the new call number is cleared by the central unit (30) for use of the mobile radio network (21), and an identification module unambiguously assigned to the new call number is made accessible to the user of the new subscription (41).

## Revendications

1. Procédé assisté par informatique pour la commande automatisée de nouveaux contrats d'abonnement pour l'utilisation d'appareils radiotéléphoniques mobiles dans un réseau radiotéléphonique mobile, au moins un contrat valide (40) étant attribué à un utilisateur (10) d'un appareil radiotéléphonique mobile (11) avec un numéro de téléphone correspondant dans le réseau radiotéléphonique mobile (21) et étant stocké dans une banque de données d'une unité centrale (30), numéro de téléphone qui est associé de manière univoque à un module d'identification (112) de l'appareil radiotéléphonique mobile (11), **caractérisé**
**en ce que** l'utilisateur (10) commande par l'appareil radiotéléphonique mobile (11) auprès de l'unité centrale (30) un nouveau contrat (41) n'existant pas encore, auquel cas il fournit les indications pour l'ouverture du contrat au moyen d'éléments de saisie de l'appareil radiotéléphonique mobile (11) et les indications faites sont transmises par le réseau radiotéléphonique mobile (21) à l'unité centrale (30),
**en ce que** l'utilisateur (10) est identifié de manière univoque à l'aide du numéro de téléphone qui est associé au module d'identification (112 de l'appareil radiotéléphonique mobile (11), au moyen de l'unité d'identification dans le réseau radiotéléphonique mobile (21), et une identification de l'utilisateur (10) est transmise à l'unité centrale (30)
**en ce que** le nouveau contrat (41) est établi par l'unité centrale (30) en se basant sur un nouveau numéro de téléphone du réseau radiotéléphonique mobile (21) et est associé à un utilisateur défini à la commande avec une adresse de facturation correspondante et est stocké dans la banque de données, le nouveau contrat (41) étant relié au contrat (40) de l'utilisateur identifié (10),
et **en ce que** le nouveau numéro de téléphone est débloqué par l'unité centrale (30) pour l'utilisation du réseau radiotéléphonique mobile (21) et un module d'identification associé de manière univoque au nouveau numéro de téléphone est rendu accessible à l'utilisateur du nouveau contrat (41).

2. Procédé pour la commande de nouveaux contrats pour l'utilisation d'appareils radiotéléphoniques mobiles dans un réseau radiotéléphonique mobile selon la revendication 1, **caractérisé en ce que** le nombre des contrats dépendants associés (41) par contrat indépendant est limité.

3. Procédé pour la commande de nouveaux contrats pour l'utilisation d'appareils radiotéléphoniques mobiles dans un réseau radiotéléphonique mobile selon l'une des revendications 1 ou 2, **caractérisé en ce que** les tarifs de base pour les contrats (41) dépendants associés au contrat indépendant (40) sont dans l'ensemble prélevés à un taux inférieur ou à un taux dégressif.

4. Procédé pour la commande de nouveaux contrats pour l'utilisation d'appareils radiotéléphoniques mobiles dans un réseau radiotéléphonique mobile selon l'une des revendications 1 à 3, **caractérisé en ce qu'**à la commande du nouveau contrat, l'utilisateur (10) est invité au moyen de l'appareil radiotéléphonique mobile (11) à fixer la manière dont l'utilisateur souhaiterait avoir accès au module d'identification associé au numéro de téléphone du nouveau contrat.

5. Procédé pour la commande de nouveaux contrats pour l'utilisation d'appareils radiotéléphoniques mobiles dans un réseau radiotéléphonique mobile selon l'une des revendications 1 à 4, **caractérisé en ce que** la commande s'effectue au moyen de l'un des protocoles de données SMS (Short Message Service = service de messages courts), par WAP (Wireless Application Protocol = protocole d'application sans fil), http (Hyper Text Transfer Protocol = protocole de transfert hyper texte) ou par USSD (Unstructured Supplementary Service Data = Données de service supplémentaires non structurées).

6. Procédé pour la commande de nouveaux contrats pour l'utilisation d'appareils radiotéléphoniques mobiles dans un réseau radiotéléphonique mobile selon l'une des revendications 1 à 5, **caractérisé en ce que** le module d'identification (112) est une carte à puce.

7. Procédé pour la commande de nouveaux contrats pour l'utilisation d'appareils radiotéléphoniques mobiles dans un réseau radiotéléphonique mobile selon l'une des revendications 1 à 6, **caractérisé en ce que** la saisie de la commande s'effectue par l'intermédiaire de l'appareil radiotéléphonique mobile (11) au moyen d'un module de reconnaissance vocale.

8. Procédé pour la commande de nouveaux contrats pour l'utilisation d'appareils radiotéléphoniques mobiles dans un réseau radiotéléphonique mobile selon l'une des revendications 1 à 7, **caractérisé en ce qu'**une fois la commande faîte, les données pour l'utilisateur (10) associées au contrat peuvent être complétées et/ou modifiées et/ou étendues par accès Internet auprès de l'unité centrale (30), l'identification de l'utilisateur (10) s'effectuant lors de la commande du nouveau contrat (41) au moyen du module d'identification (112) de l'appareil radiotéléphonique mobile (11).

9. Procédé pour la commande de nouveaux contrats pour l'utilisation d'appareils radiotéléphoniques mobiles dans un réseau radiotéléphonique mobile selon l'une des revendications 1 à 8, **caractérisé en ce que** le nouveau contrat (41) est un contrat (41) avec une procédure de cartes prépayées (Prepaid) ou d'abonnement mensuel (Postpaid), un montant de carte ou d'abonnement mensuel pour le nouveau contrat (41) étant débité mensuellement à l'utilisateur (10) du contrat indépendant (40).

10. Procédé assisté par informatique pour la commande automatisée de nouveaux contrats d'abonnement pour l'utilisation d'appareils radiotéléphoniques mobiles dans un réseau radiotéléphonique mobile, au moins un contrat valide (40) étant attribué à un utilisateur (10) d'un appareil radiotéléphonique mobile (11) avec un numéro de téléphone correspondant dans le réseau radiotéléphonique mobile (21) et étant stocké dans une banque de données d'une unité centrale (30), numéro de téléphone qui est associé de manière univoque à un module d'identification (112) de l'appareil radiotéléphonique mobile (11), **caractérisé**
**en ce que** l'utilisateur (10) commande par Internet (20) auprès de l'unité centrale (30) un nouveau contrat n'existant pas encore, auquel cas il fournit les indications nécessaires à l'ouverture du contrat au moyen d'éléments de saisie de l'appareil radiotéléphonique mobile (11) et les indications faites sont transmises par le réseau radiotéléphonique mobile (21) à l'unité centrale (30),
**en ce que** l'utilisateur (10) du contrat existant valide la commande du nouveau contrat par un appel auprès de l'unité centrale (30) au moyen de son appareil radiotéléphonique mobile (11) par l'intermédiaire d'un réseau radiotéléphonique mobile, l'utilisateur étant identifié de manière univoque au moyen d'une unité d'identification dans le réseau radiotéléphonique mobile (21) et une identification de l'utilisateur (10) étant transmise à l'unité centrale (30),
**en ce que** le nouveau contrat (41) est établi par l'unité centrale (30) en se basant sur un nouveau numéro de téléphone du réseau radiotéléphonique mobile (21) et est associé à un utilisateur défini à la commande avec une adresse de facturation correspondante et est stocké dans la banque de données, le nouveau contrat (41) étant relié au contrat (40) de l'utilisateur identifié (10),
et **en ce que** le nouveau numéro de téléphone est débloqué par l'unité centrale (30) pour l'utilisation du réseau radiotéléphonique mobile (21) et un module d'identification associé de manière univoque au nouveau numéro de téléphone est rendu accessible à l'utilisateur du nouveau contrat (41).
